# EUROPEAN PATENT SPECIFICATION

(11) **EP 2 888 941 B1**
(45) Date of publication and mention of the grant of the patent: **16.05.2018**
(21) Application number: 14199894.8
(22) Date of filing: 22.12.2014
(51) Int. Cl.: A01M 21/04, A01D 43/14

(54) **Equipment for destroying turf**
Rasenzerstörungsausrüstung
Équipement pour détruire le gazon

(30) Priority: 31.12.2013 IT PD20130362
(43) Date of publication of application: 01.07.2015
(73) Proprietor: Agribiomachine S.r.l., 37135 Verona (IT)
(72) Inventor: Zecchinelli, Paolo, 37026 Pescantina (VR) (IT); Micheletti, Giorgio, 37015 S. Ambrogio di Valpolicella (VR) (IT); Micheletti, Andrea, 37026 Ospedaletto di Pescantina (VR) (IT)
(74) Representative: Gallo, Luca

(56) References cited:
- WO-A1-2013/006921
- WO-A1-2013/093495
- DE-U1- 29 913 887
- FR-A1- 2 887 113
- US-A- 5 385 106
- US-A1- 2007 227 418
- US-A1- 2009 249 758

## Description

The present invention regards equipment for destroying turf, in particular in rows of tree cultivations.

The present equipment is intended to be employed in agriculture for removing weeds from ground areas placed in proximity to rows of orchards and in particular vineyards, or for cleaning the edges of the roads from weeds that with growth thereof could compromise the integrity of the road surface.

The present invention is therefore inserted in the industrial field of production of farming machines, for moving the ground or for road maintenance.

As is known, there is presently the need to achieve completely organic cultivations, or cultivations with a limited use of chemical products.

The weed clearing of tree cultivations, such as orchards and vineyards, has for years been carried out with chemical products, with the main drawback of generating considerable pollution of the environment with health risks that vary in accordance with the chemical products employed.

More recently, in compliance with increased sensitivity and general attention of the public towards the environment, also in agriculture, chemical treatments have been at least partly substituted by mechanical treatments for removing the weeds responsible for reducing the nutriment and water supply to the plantings.

First, a mixed weed-clearing system was employed, i.e. of chemical type between the tree stocks along the rows of tree cultivations and of mechanical type next to the rows. Subsequently, many machines were developed able to enter into and exit from the aligned tree cultivations of the rows in order to remove weeds also from the space between the stocks.

In particular, numerous machine types are known on the market that are aimed to mechanically treat the ground along the rows in order to eliminate the weeds.

A first known type of equipment employs a weeder blade mounted on a frame carried by a tractor at its ventral side. During the advancing of the tractor along the rows, the blade advances parallel to the tractor and thus cuts the ground and mixes up its surface layer. During its advancing action, the blade cuts the weeds both in the area next to the rows and in the area comprised between the stocks of the rows. For such purpose, a sensor is provided that detects the presence of the trees or poles along the row and, by means of a hydraulic actuator connected to the oil distribution control unit of the tractor, repeatedly commands the movement of the blade with respect to the line of the row in order to allow the same blade to enter into and exit from one stock and the next of the row.

Such equipment has in practice shown that it does not lack drawbacks.

A first drawback lies in the fact that the weeder blade carries out a rather invasive and deep treatment on the ground, which may partly interfere with the root apparatus of the trees of the plantation.

A second drawback lies in the fact that the roots of the weeds remain substantially intact and at least partially buried, such that the same weeds can grow back and attain considerable size even in only a few weeks time.

A third drawback lies in the fact that with each passage of the blade, there is an increase of the under-row ground mound, which often represents an excessive and undesired movement of the ground itself.

Also known is equipment that exploits an analogous mechanical principle and that is provided with two rotating horizontal blades fit on a vertical shaft and placed beneath a bell-shaped element supported by a frame in the ventral position of a tractor. Also this equipment solution has shown drawbacks analogous to that illustrated above.

A second known type of equipment, described for example in the patent IT 1370398, employs a rotating shaft arranged parallel to the ground, to which a plurality of flexible nylon filaments are fixed; due to the centrifugal force, such filaments are arranged radially to intercept the grass/weeds, causing the cutting thereof.

Such equipment solution allows mowing grass/weeds even between the stocks of tree cultivations, but it does not cut deeply into their root apparatus such that the weeds continue to remove nutrient substances and water from tree cultivations and grow back in little time.

Known from the international patent WO 2013/006921 is equipment for eliminating the weeds associated with the rows of tree cultivations, which employs one or more cutting heads; each head can be driven to cut the weeds between the plants of a row and for such purpose is supported by a rotatable arm of a frame supported by a tractor to be moved along the rows. Each head is provided with a nozzle capable of emitting a water jet that is horizontal or has a slight tilt towards the ground and is connected to a water tank through a pump. Such pump is capable of producing a pressure on the order of 30 bar, sufficient for cutting weeds by means of the water jet emitted by the nozzles. The water jet does not produce any effect on the ground and does not minimally damage the root apparatus of the weeds, which grow back in little time, once again removing water, oxygen and nutrient substances from tree cultivations.

Also known from the patents GB 2093327 and EP 1097625 are other machines for cutting grass/weeds by means of high-pressure water jets substantially parallel to the ground. Such machines have the abovementioned limits relative to the temporary nature of the weed-clearing operation, which must be repeated after brief time periods since the weeds - whose regeneration capacity is not at all compromised - in little time return to limiting the correct development of the trees of the row cultivation.

In this situation, the problem underlying the present invention is to eliminate the drawbacks manifested by the solutions known up to now, by providing equipment for destroying turf, in particular in rows of tree cultivations, which eliminates the weeds and limits their growing back for a prolonged time period. Further object of the present finding is to provide equipment for destroying turf, in particular in rows of tree cultivations, which destroys the root apparatus of the weeds, preventing a quick growing back thereof.

Further object of the present finding is to provide equipment for destroying turf, in particular in rows of tree cultivations, which treats the ground, chopping a surface layer thereof suitable for destroying the root apparatus of the weeds. Further object of the present finding is to provide equipment for destroying turf, in particular in rows of tree cultivations, which is fully ecological, not releasing polluting substances on the ground.

Further object of the present finding is to provide equipment for destroying turf, in particular in rows of tree cultivations, which is simple and inexpensive to obtain.

Further object of the present finding is to provide equipment for destroying turf, in particular easily employable for weed-clearing the edges of road shoulders.

The technical characteristics of the finding, according to the aforesaid objects, can be clearly seen in the contents of the below-reported claims and the advantages thereof will be clearer in the following detailed description, made with reference to the enclosed drawings which represent several merely exemplifying and non-limiting embodiments, in which:
- figure 1 shows an overall top schematic view of a first embodiment of the equipment for destroying turf, in particular in rows of tree cultivations, subject of the present invention, towed by a tractor;
- figure 2 shows an enlarged detail of the equipment of figure 1 according to the invention, relative to a rotor provided with nozzles for emitting water jets on the ground, in a section view according to a median vertical plane;
- figure 3 shows a perspective of a second embodiment of the equipment according to the invention, with some parts removed in order to better illustrate other parts;
- figure 4 shows a perspective and schematic view of a detail of the equipment of figure 3 relative to a rotor provided with support plate with discoid form.

In accordance with the figures of the enclosed drawings, reference number 1 indicates overall the equipment for destroying turf, in particular in rows of tree cultivations, subject of the present invention.

This equipment can be towed or carried by a motor drive means generically indicated hereinbelow with the term tractor 2, along a direction of advancement Y parallel to rows F of tree cultivations C in order to treat orchards, vineyards etc., or along the advancement direction of a road in order to treat at least the internal part of the non-asphalt road shoulder, which runs along the sides of the road outside the roadway.

The equipment 1, subject of the present invention, comprises a support frame 3 susceptible of allowing the mechanical mounting of the equipment 1 on the tractor 2 in front, rear or ventral position, or in a towed position on a trailer R of the tractor 2. In operation, the latter is motor driven for proceeding in the advancement direction Y parallel to the rows F of the tree cultivations C, allowing the equipment 1 to treat the ground T as will be clarified hereinbelow.

With the term frame 3 of the equipment 1, it must be intended all those structural elements necessary for mechanically connecting the equipment 1, subject of the present invention, to the tractor 2 and which can also be made with clamping and frameworks physically separate from each other, as is better specified hereinbelow, and directly fixed to the frame 3 of the same tractor 2 (with or without trailer).

The equipment 1 comprises a main high-pressure pump 4 mounted on the tractor 2 through the frame 3, and adapted to be driven by motor drive means 5, advantageously constituted by a cardan joint of the tractor 2, or by another force grip thereof or by an hydraulic motor driven by a provided hydraulic circuit of the tractor 2, not illustrated in detail since it is well known to the man skilled in the art.

The equipment 1 further comprises a tank of liquid 6, advantageously water, susceptible of being carried by the tractor 2 or, preferably, by the trailer R connected to the rear of the same tractor 2.

The tank 6 can have a capacity for example comprised between half a cubic metre, for the smallest plots of land, to several cubic metres for large farms. The selection of the size of the tank 6 can also depend on the distance between the rows F and on the possibilities of manoeuvring at the ends of the rows. In case of use of the equipment for weed-clearing the shoulder on the side of roadways, the capacity of the tank can for example also depend on the road size.

The tank 6 supplies high-pressure pump 4 by means of a supply duct 8 preferably intercepted by an auxiliary over-supply pump 9, susceptible of ensuring, for the suction of the main high-pressure pump 4, a head in the suction duct 8' that is greater than a pre-established threshold value, preferably of the order of several bar; this occurs so as to prevent cavitation phenomena that could compromise correct pump operation and ruin it. Preferably, upstream of the main pump 4, the suction duct 8' intercepts filtering means 7 adapted to prevent the entrance of undesired bodies capable of compromising the operation of the main pump 4 itself.

According to the idea underlying the present invention, the equipment 1 further comprises at least one rotor 10, rotatably mounted on the frame 3 of the equipment 1, in a position facing the ground T (whether this is a cultivation or road shoulder).

The rotor 10 can be driven to rotate around a substantially vertical rotation axis Z, by movement means 12.

The latter are advantageously obtained with a first hydraulic motor that receives pressurised oil from the hydraulic circuit of the tractor 2.

Of course, without departing from the protective scope of the present patent, two rotors can be provided, mounted on the two sides of the tractor 2 in order to simultaneously treat the ground T of two contiguous rows F during tractor advancement.

Mounted on the rotor 10 are at least two nozzles 11 which receive the water supply from the delivery duct 40 of the main pump 4, with a flow of fluid at high pressure comprised between 500 and 1500 bar. A rotating hydraulic joint 80 is provided for supplying the rotor 10 which rotates with the delivery duct 40 of the main pump 4, which instead does not rotate.

According to the idea underlying the present invention, the nozzles 11 are mounted on the rotor 10 in positions adapted to project tilted rotating jets 13 of high-pressure fluid on the ground; such jets hit the ground T, forming side-by-side strips or lines, substantially with circular shape or better yet more precisely with the shape of geometric figures wherein the circular trajectories defined by the rotating nozzles with respect to the machine are added to the linear trajectories of the machine advancement.

The side-by-side strips will in particular be advantageously adjacent, i.e. where one strip finishes, another strip starts laterally thereto, but otherwise they could also be radially spaced.

For such purpose, the nozzles 11 can be mounted at different radial distances from the rotation axis Z, i.e. simultaneously or alternatively they can be mounted with different tilts.

Each nozzle 11 has a direction of incidence X on the ground that determines an incidence angle α comprised between 120 - 170 degrees, evaluated with respect to the axis orthogonal to the plane of the ground T, with sense exiting from the ground (and preferably with incidence angle α comprised between 130 - 155). Advantageously the distance of the nozzles from the ground is comprised in the interval between 1 and 8 centimetres.

The rotating jets 13 directed against the ground T are thus susceptible of penetrating for a depth greater than one centimetre, and advantageously comprised between 1 and 4 cm, below the surface of the ground T, thus determining the mechanical chopping of the roots of the weeds that form the aforesaid turf.

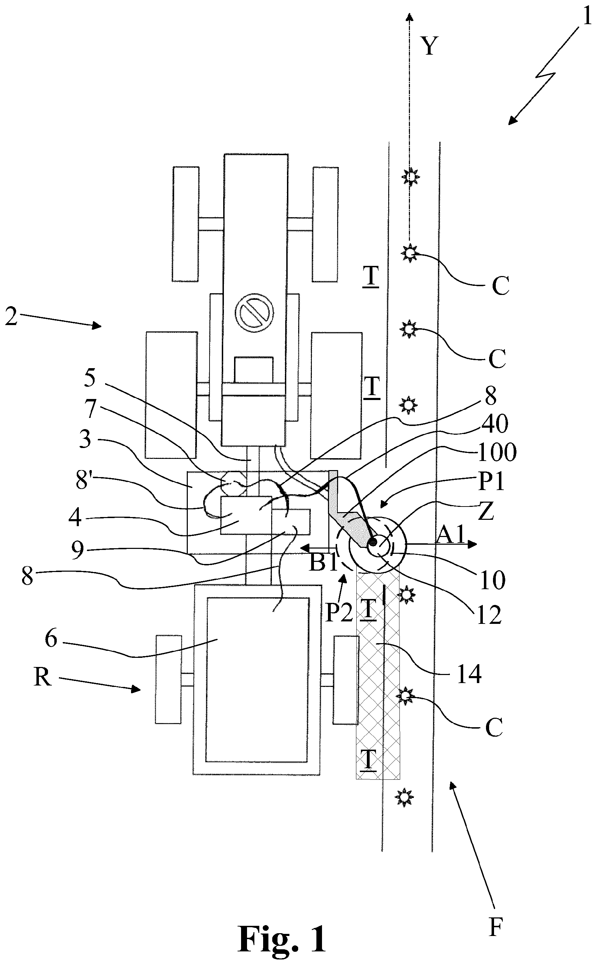

The circular trajectories defined by the nozzles 11 are overlapped following the advancing of the tractor 2, defining a zone of chopped ground 14 (schematically indicated with a net in figure 1) placed, in case of use of the equipment on tree cultivations, next to the row F and very close to the line of tree cultivations C, and, in case of use of the equipment on roads, next to the roadway on its external edge.

Preferably, there are more than two nozzles 11, advantageously four, and for example they are preferably angularly equidistant along concentric circumferences. In the case of four nozzles 11, the latter are angularly spaced by 90 degrees with respect to each other.

The ejection mouth 11' of the nozzles 11 is placed, as said, at a distance comprised between 1-8 cm from the ground T, on one hand in order to prevent the excessive dispersion of the power provided by the main pump 4, and on the other hand in order to define, on the ground T, a circular sign preferably with size comprised between 0.8 cm and 5 cm.

Of course, as stated, the trajectories of the signs designed on the ground T will not be perfectly circular but rather will have oval shape, given the simultaneous advancing of the tractor 2 which makes the nozzles 11 advance along the rows F. The movement means 12, susceptible of rotating the rotor 10, can be obtained from the reaction to the same force of emission of the water from the nozzles 11 when they are arranged obliquely with respect to the plane of the ground T.

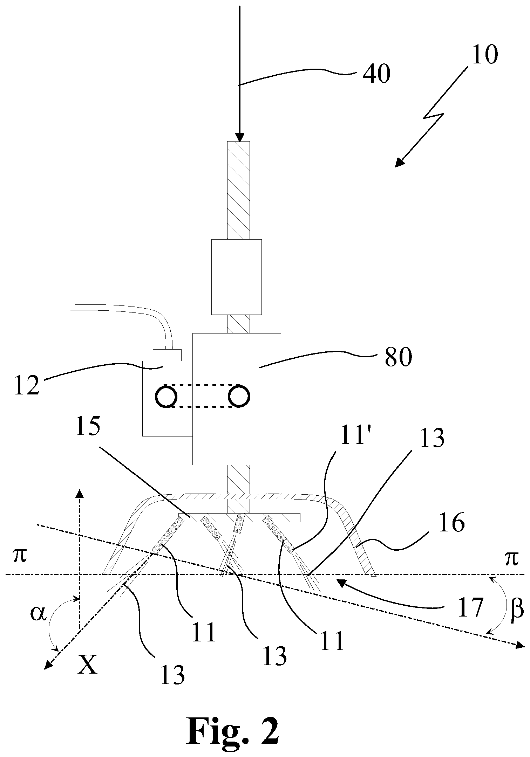

In accordance with a first embodiment of the present invention illustrated in figure 2, the rotor 10 comprises a support plate 15, on which the nozzles 11 are fixed, and a rotating bell-shaped element 16, which has a cavity 17 directed towards the ground T and houses the nozzles 11 therein.

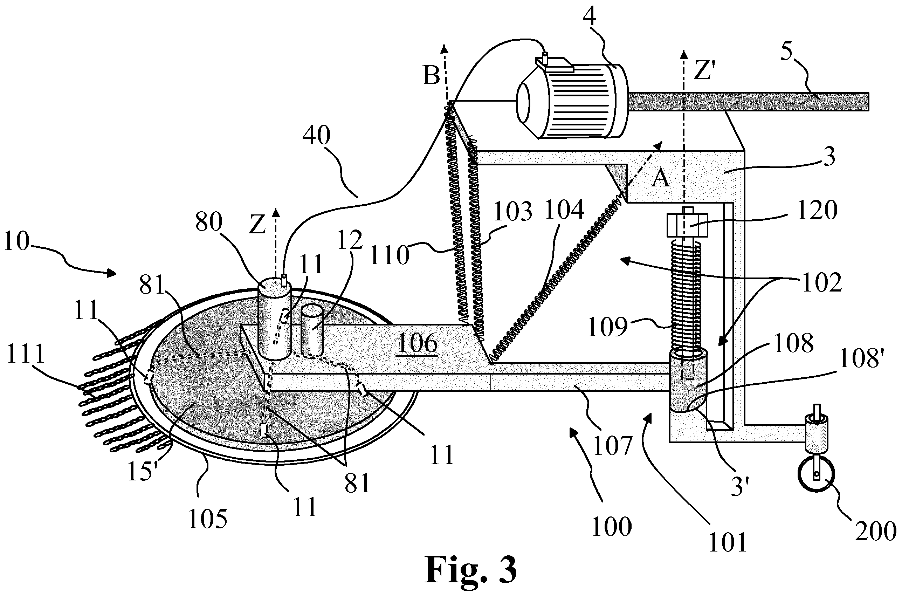

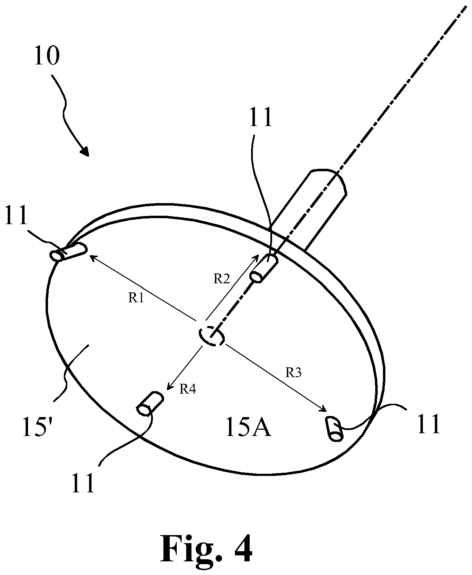

The bell-shaped element 16 integrally rotates with the nozzles 11 and the entire rotor 10, and carries out the function of protecting the same nozzles 11 from possible obstacles that they might meet during their advancing close to the ground T, in particular constituted by stones. The latter, by knocking against the external surface of the rotating bell-shaped element 16, are in fact moved away from the trajectory of the nozzles 11, protecting the latter from possible damage. In accordance with a preferred second embodiment of the present invention illustrated in figures 3 and 4, the rotor 10 comprises a support plate 15' with discoid form substantially facing and coplanar with the ground (T), with substantially vertical rotation axis Z orthogonal to the lying plane of the plate 15', from whose lower face 15A the nozzles 11 project.

For both embodiments, the nozzles 11 can be mounted at different radial distances from the rotation axis Z, i.e. simultaneously or alternatively they can be mounted with different tilts.

The nozzles are advantageously supplied by the rotating hydraulic joint 80 through tubes 81 arranged radially on the support plate 15'.

The nozzles are advantageously arranged at different radial distances starting from over half the radius towards the peripheral edge, in order to cover a wider zone of treatment of the ground.

In the example of figure 4, nozzles 11
are assumed at the radial distances R1-R4, of which at least two are different from each other (in figure 4, all are indicated as different from each other).

Such plate 15' is advantageously made of plastic material and in particular with a Teflon disc with diameter comprised between 200 and 800 mm, in particular fixed with screws to the rotation shaft of the hydraulic motor 12.

Such Teflon disc 15' preferably has the tubes 81 inserted in radial holes obtained in its thickness, which terminate at the radial position from which they must emit the pressurised water jets towards the ground.

Preferably the rotor 10 thus obtained is mounted on a bracket structure 100 for the support thereof, on which also the movement means 12 and the hydraulic joint 80 are advantageously arranged.

Such bracket structure 100 is vertically hinged to the frame 3 connected to the tractor by means of a hinge 101, such that it can rotate with respect to a substantially vertical axis Z' between an interference position PI inside the rows and a non-interference position P2 outside the rows in the case of tree cultivations, or between an internal position and an external position with respect to the uprights of a guardrail or more generally to obstacles on the edge of a roadway, in the case of a road. In the latter case, in addition to or in place of the uprights of the guardrail, there may be advertising signs, road signs, benches, trash cans, guard stones, reflective poles or more generally all the normal obstacles that can be found on the side of a road.

The bracket structure 100 is forced by thrust means 102 to always return towards the position inside the rows or roadside obstacles, i.e. towards the position PI of interference with the plants of rows or with the roadside obstacles, during the advancing of the tractor along an advancement direction parallel to the rows or road.

The interference position PI inside the rows or between the roadside obstacles represents the position of stability in which the bracket structure is arranged, in particular subjected to the action of its weight and of the different springs as specified hereinbelow.

Advantageously, the bracket structure 100 can at least partly unload its weight by means of suspension means 103 preferably obtained with a first spring advantageously mounted between the frame 3 and the bracket structure 100. The thrust means 102 advantageously comprise at least first elastic means 104, simply obtained for example with a second spring, connected between the bracket structure 100 and the frame 3 and mounted along a connection direction A having a component A1 in the direction of the rows or towards the interference position PI inside the rows in order to carry the bracket structure 100 into such position, after it has sustained a thrust and moved away from such position following interference with the plant or with an obstacle on the side of the road during the advancing of the tractor.

Advantageously, a support frame 105 is arranged around the rotor 10 and is directed so as to abut against the trunk of the plants or against a roadside obstacle during the advancing of the equipment 1, and consequently push the bracket structure 100 away, rotating it around its substantially vertical rotation axis Z' from the position inside the rows or obstacles to the position outside the rows or obstacles.

Such support frame 105 is for example obtained with a metal ring supported by the bracket structure 100 at a few centimetres from the edge of the rotor 10.

In accordance with the embodiment illustrated in figure 3, the bracket structure 100 comprises a support plate 106 beneath which the rotor 10 is mounted by means of the rotating hydraulic joint 80, from which an arm 107 is extended towards the frame 3; the free end of such arm 107 bears a bushing 108 adapted to obtain the jacket of the hinge 101 pin.

Such bushing 108 has a tilted profile 108' that rests on a tilted support 3' of the frame 3, so as to be forced by its weight towards the position inside the rows.

The bushing 108 can vertically slide along the hinge 101 pin and is opposed in its lifting by the abutment against the tilted surface 3' of the frame 3 by the action of a third spring 109 aimed to push the bushing 108 downward. The aforesaid third spring 109 is mounted coaxially with the pin and operates between an end stop nut 120 mounted on the pin and the aforesaid bushing 108.

In case of vertical stresses transmitted from the frame 3 to the bracket structure 100, e.g. due to stones or rugged terrain, such bracket structure 100 can be lifted by sliding with the bushing 108 along the hinge 101 pin in order to follow the received stress.

The thrust means 102 comprise, according to a preferred embodiment of the invention in addition to those already advantageously mentioned above, second elastic means 110, e.g. obtained with a fourth spring; also such elastic means 110 are connected between the bracket structure 100 and the frame 3 but they are mounted along a connection direction B having a component B1 in the direction towards the position outside the rows, having the purpose of preventing an excessively deep insertion of the rotor 10 between the plants or roadside obstacles when the rotor is moved beyond the position inside the rows into a position further away from the tractor 2 with the arm of the bracket 100 even more externally open.

Therefore, the bracket structure 100 is forced by the thrust means 102 to always return towards the interference position PI inside the rows or roadside obstacles, always being forced towards such position both after having intercepted a trunk or an obstacle and having been moved away therefrom (in this case by operating the first elastic means 104), and after having been excessively inserted between the rows or obstacles (in the latter case by operating the second elastic means 110).

In operation, the bracket structure 100, preferably but not necessarily having at least partly unloaded its weight that lies on the hinge 101 due to the action of the first and/or second and/or fourth spring 103, 104, 110, oscillates with little friction between the two internal (or interference) positions and external (or non-interference) positions with respect to the rows, following the blows that it receives by striking with its support frame 105 against the trunks of the trees of the rows or against the roadside obstacles.

For the entire space that lies between each row or obstacle, the bracket structure 100 is situated in a stable position inside the rows, while each time that it abuts with the support frame 105 against the trunk of a tree of the row or against a roadside obstacle, it is moved towards the external non-interference position until there is no longer interference with the trunk of the plant or with the roadside obstacle and the bracket structure 100 can return into the interference position PI between the rows or between the roadside obstacles.

In this oscillating movement, the thrust means 102 are aimed to ensure that, in the shortest time possible, the rotor 10 returns to the interference position PI inside the rows. In accordance with the provision of obtaining the thrust means 12 at least with second elastic means 104, the latter will be aimed to quickly bring the bracket 100 back towards the aforesaid internal position as soon as there is no more plant or obstacle presence.

In accordance with an advantageous characteristic of this second embodiment, in the rear part of the support frame 105 i.e. that opposite the tractor 2, a protection casing 111 is mounted that is for example obtained with chains. Such protection casing 111 is adapted to prevent the sprays or even small stones from being ejected by said rotor 10 towards the machine or in any case towards zones outside the area in proximity to the rotor.

Advantageously, the frame 3 of the equipment 1 is provided with a wheel 200 for resting on the ground T, which is adjustably mounted on an upright of the frame 3 in order to vary the height of the rotor 10 with respect to the ground.

In accordance with one characteristic of the invention, the plane of the plate 15' or the opening profile of the bell-shaped element 16 can define a lying plane π of the rotor 10 which is substantially coplanar with the ground, or which is advantageously tilted forward, i.e. in the advancing sense of the tractor 2, by an angle β smaller than 8 degrees in order to move part of the ground treated by the nozzles 11, during the advancing of the equipment 1, towards the rear part of the same rotor 10 which thus preferably remains slightly raised from the ground T.

The same lying plane π of the rotor 10 can be tilted laterally with respect to the advancement direction Y of the rotor 10 parallel to the advancement direction Y of the tractor 2, by an angle γ (not illustrated) in order to substantially face, in a coplanar manner, the mound of the row F of the tree cultivation, i.e. that mound of earth that is normally provided along the row F.

The movement means 12 are susceptible of rotating the rotor 10 at a speed comprised between 300 and 1000 revolutions per minute in order to uniformly distribute the action of the jets 13 over the entire ground zone affected by the advancing of the rotor on the ground T, following the advancing of the tractor 2. The finding thus conceived therefore achieves the predefined objects.

Obviously, the present finding can also assume, in the practical achievement thereof, shapes and configurations that are different from that illustrated above, without departing from the scope of the appended claims.

## Claims

1. Equipment for destroying turf, in particular in rows of tree cultivations, comprising:
- a support frame (3) susceptible of being carried or towed by a tractor (2) in a direction of advancement (Y) parallel to the rows (F) of said tree cultivations (C) or the direction of a road;
- a high-pressure pump (4) mounted on said frame (3) and suitable for being driven by motor drive means (5) associated with said tractor (2);
- a tank of liquid (6) susceptible of being carried or towed by said tractor (2), which supplies said high-pressure pump (4);
- at least one rotor (10) rotatably mounted on said frame (3) in a position facing the ground (T), driven to rotate around a substantially vertical rotation axis (Z) by movement means (12);
- at least two nozzles (11) mounted on said rotor (10) and supplied by said pump (4); said nozzles projecting tilted rotating jets (13) of high-pressure fluid incident on the ground (T) according to side-by-side strips, and susceptible of penetrating for at least one centimetre under the surface of the ground (T), chopping the root apparatus of said turf; said equipment being **characterised in that** said nozzles (11) are supplied by said pump (4) with a flow of fluid at a pressure comprised between 500 and 1500 bar, said nozzles (11) being mounted on said rotor (10) at different radial distances from said rotation axis (Z);
said nozzles (11) being tilted according to a direction of incidence (X) on the ground with incidence angle (α) comprised between 120 - 170 degrees evaluated with respect to the axis orthogonal to the plane of the ground (T) with sense exiting from the ground.

2. Equipment for destroying turf according to claim 1, **characterised in that** said incidence angle (α) is comprised between 130 - 155 degrees.

3. Equipment for destroying turf according to claim 1, **characterised in that** said rotor (10) comprises a support plate (15') with circular shape from whose lower face (15A) at least two nozzles (11) project, in particular supplied by means of radiating tubes (81).

4. Equipment for destroying turf according to any of the preceding claims, **characterised in that** it comprises a bracket structure (100), which supports said rotor (10) and is vertically hinged to said frame (3) being susceptible of rotating with respect to a substantially vertical axis (Z') between a stable interference position (P1) inside the rows or roadside obstacles and a non-interference position (P2) outside the rows or roadside obstacles, said bracket structure (100) being in particular susceptible of being moved from said position (P1) inside the rows or roadside obstacles to said position (P2) outside the rows or roadside obstacles by interaction with the trunks of the rows of said tree cultivations (C).

5. Equipment for destroying turf according to claim 4, **characterised in that** it comprises thrust means (102) suitable for pushing said bracket structure (100) towards said stable interference position (P1) inside the rows or roadside obstacles.

6. Equipment for destroying turf according to claim 5, **characterised in that** said thrust means (102) comprise at least first elastic means (104) connected between the bracket structure (100) and the frame (3) along a connection direction (A) having a component in the direction of said rows (F) for pushing said bracket structure (100) from said position (P2) outside the rows or roadside obstacles to said position (P1) inside the rows or roadside obstacles.

7. Equipment for destroying turf according to claim 4, **characterised in that** it comprises a support frame (105) arranged around said rotor (10) and directed so as to abut against the trunk of the plants or against roadside obstacles during the advancing of said equipment, to move said bracket structure (100) rotatably around its substantially vertical rotation axis (Z') from said position (P1) inside the rows or roadside obstacles to said position (P2) outside the rows or roadside obstacles.

8. Equipment for destroying turf according to claim 4, **characterised in that** said bracket structure (100) comprises a support plate (106) beneath which the rotor (10) is mounted by means of a rotating hydraulic joint (80), from which an arm (107) is extended that is pivoted at the end to said frame (3) by means of a bushing (108) with a tilted slide profile (108') on the frame (3), such that the bushing (108) is forced by the weight towards said position (P1) inside the rows or roadside obstacles.

9. Equipment for destroying turf according to claim 4, **characterised in that** it comprises suspension means (103), in particular obtained with at least one spring advantageously mounted between said frame (3) and said bracket structure (100).

10. Equipment for destroying turf according to claim 1, **characterised in that** said rotor (10) comprises a rotating bell-shaped element (16), which has a cavity (17) directed towards the ground and houses said nozzles (11) therein in order to protect them from obstacles during the advancing of the rotor close to the ground.

11. Equipment for destroying turf according to any of the preceding claims, **characterised in that** said nozzles (11) have the ejection mouth (11') arranged at a distance of 1-8 cm from the ground.

12. Equipment for destroying turf according to any of the preceding claims, **characterised in that** said rotor (10) is susceptible of being driven by said movement means (12) to rotate at a speed of 300 to 1000 revolutions per minute in order to uniformly distribute the action of the jets on the ground following the advancing of the tractor.

13. Equipment for destroying turf according to any of the preceding claims, **characterised in that** said nozzles (11) lie on a plane tilted forward by an angle smaller than 8 degrees in order to move part of the treated ground towards the rear part during the advancing.

14. Equipment for destroying turf according to any of the preceding claims, **characterised in that** said nozzles (11) lie on a plane tilted laterally with respect to the advancement direction of the rotor (10) that is parallel to that of said tractor (2), such plane substantially coplanar with and facing the mound of the row of tree cultivation (C).

## Patentansprüche

1. Rasenzerstörungsausrüstung, insbesondere zum Einsatz in Baumzuchtreihen, die Folgendes umfasst:
- einen Trägerrahmen (3), der geeignet ist, von einer Zugmaschine (2) in einer Vorschubrichtung (Y) parallel zu den Reihen (F) der genannten Kulturen (C) oder zur Richtung einer Straße getragen oder gezogen zu werden;
- eine auf dem genannten Rahmen (3) montierte Hochdruckpumpe (4), die geeignet ist, von mit der genannten Zugmaschine (2) verbundenen Antriebselementen (5) betätigt zu werden;
- einen Flüssigkeitsbehälter (6), der geeignet ist, von der genannten Zugmaschine (2) getragen oder gezogen zu werden, und die genannte Hochdruckpumpe (4) versorgt;
- mindestens einen drehbar auf dem genannten Rahmen (3) in gegenüberliegender Position im Verhältnis zum Boden (T) montierten Rotor (10), der von Bewegungselementen (12) um eine im Wesentlichen vertikale Drehachse (Z) in Drehung versetzt wird;
- mindestens zwei auf dem genannten Rotor (10) montierte und von der genannten Pumpe (4) versorgte Düsen (11);
wobei die genannten Düsen geneigte Drehstrahlen (13) von unter Hochdruck stehender Flüssigkeit projizieren, die in nebeneinanderliegenden Streifen auf den Boden (T) wirken und geeignet sind, wenigstens einen Zentimeter unter die Oberfläche des Bodens (T) einzudringen und den Wurzelstock des genannten Rasens zu zerkleinern;
wobei die genannte Ausrüstung **dadurch gekennzeichnet ist, dass** die genannten Düsen (11) von der genannten Pumpe (4) mit einem Flüssigkeitsstrom mit einem Druck zwischen 500 und 1500 bar versorgt werden,
wobei die genannten Düsen (11) auf dem genannten Rotor (10) in einem unterschiedlichen radialen Abstand von der genannten Drehachse (Z) montiert sind;
wobei die genannten Düsen (11) entlang einer Einfallrichtung (X) zum Boden mit einem Einfallwinkel (a) zwischen 120 und 170 Grad, im Verhältnis zur senkrechten Achse zur Ebene des Bodens (T) mit Richtung vom Boden weg bewertet, geneigt sind.

2. Rasenzerstörungsausrüstung nach Anspruch 1, **dadurch gekennzeichnet, dass** der genannte Einfallwinkel (a) zwischen 130 und 155 Grad beträgt.

3. Rasenzerstörungsausrüstung nach Anspruch 1, **dadurch gekennzeichnet, dass** der genannte Rotor (10) eine kreisförmige Trägerplatte (15') umfasst, von deren Unterseite (15A) mindestens zwei Düsen (11) vorstehen, die insbesondere über strahlenförmig angeordnete Rohre (81) versorgt werden.

4. Rasenzerstörungsausrüstung nach irgendeinem der vorangegangenen Ansprüche, **dadurch gekennzeichnet, dass** sie eine Konsolenstruktur (100) umfasst, die den genannten Rotor (10) trägt und vertikal an dem genannten Rahmen (3) verschraubt ist, die geeignet ist, im Verhältnis zu einer im Wesentlichen vertikalen Achse (Z') zwischen einer stabilen Überschneidungsposition (P1) innerhalb der Reihen oder Hindernisse am Straßenrand und einer Nicht-Überschneidungsposition (P2) außerhalb der Reihen oder Hindernisse am Straßenrand zu drehen, wobei die genannte Konsolenstruktur (100) insbesondere geeignet ist, aus der genannten Position (P1) innerhalb der Reihen oder Hindernisse am Straßenrand in die genannte Position (P2) außerhalb der Reihen oder Hindernisse am Straßenrand durch die Interaktion mit dem Stamm der Reihen der genannten Kulturen (C) versetzt zu werden.

5. Rasenzerstörungsausrüstung nach Anspruch 4, **dadurch gekennzeichnet, dass** sie Schubelemente (102) umfasst, die geeignet sind, die genannte Konsolenstruktur (100) in Richtung der genannten stabilen Überschneidungsposition (P1) innerhalb der Reihen oder der Hindernisse am Straßenrand zu verschieben.

6. Rasenzerstörungsausrüstung nach Anspruch 5, **dadurch gekennzeichnet, dass** die genannten Schubelemente (102) mindestens erste elastische Elemente (104) umfassen, die zwischen der Konsolenstruktur (100) und dem Rahmen (3) entlang einer Verbindungsrichtung (A) mit einer Komponente in Richtung der genannten Reihen (F) verbunden sind, um die genannte Konsolenstruktur (100) aus der genannten Position (P2) außerhalb der Reihen oder Hindernisse am Straßenrand in die genannten Position (P1) innerhalb der Reihen oder Hindernisse am Straßenrand zu verschieben.

7. Rasenzerstörungsausrüstung nach Anspruch 4, **dadurch gekennzeichnet, dass** sie einen um den genannten Rotor (10) angeordneten Stützrahmen (105) umfasst, der während des Vorschubs der genannten Ausrüstung gegen den Stamm der Bäume oder die Hindernisse am Straßenrand anschlagen soll, um die genannte Konsolenstruktur (100) drehbar um ihre im Wesentlichen vertikale Drehachse (Z') aus der genannten Position (P1) innerhalb der Reihen oder Hindernisse am Straßenrand in die genannte Position (P2) außerhalb der Reihen oder Hindernisse am Straßenrand zu verschieben.

8. Rasenzerstörungsausrüstung nach Anspruch 4, **dadurch gekennzeichnet, dass** die genannte Konsolenstruktur (100) eine Halteplatte (106) umfasst, unter der der Rotor (10) mit Hilfe eines hydraulischen Drehgelenks (80) montiert ist, von der aus ein Ausleger verläuft, der am Ende des genannten Rahmens (3) mittels einer Buchse (108) mit geneigtem Gleitprofil (108') auf dem Rahmen (3) verschraubt ist, um durch das Gewicht in Richtung der genannten Position (P1) innerhalb der Reihen oder Hindernisse am Straßenrand versetzt zu werden.

9. Rasenzerstörungsausrüstung nach Anspruch 4, **dadurch gekennzeichnet, dass** sie Aufhängungselemente (103) umfasst, die insbesondere durch mindestens eine Feder erzielt werden und vorteilhafterweise zwischen dem genannten Rahmen (3) und der genannten Konsolenstruktur (100) montiert sind.

10. Rasenzerstörungsausrüstung nach Anspruch 1, **dadurch gekennzeichnet, dass** der genannte Rotor (10) eine Drehglocke (16) mit einem zum Boden gerichteten Hohlraum (17) umfasst, in deren Inneren die genannten Düsen (11) untergebracht sind, um sie während des Vorschubs des Rotors über dem Boden zu schützen.

11. Rasenzerstörungsausrüstung nach irgendeinem der vorangegangenen Ansprüche, **dadurch gekennzeichnet, dass** die genannten Düsen (11) die Ausgangsöffnung (11') in einem Abstand zwischen 1 und 8 cm vom Boden angeordnet aufweisen.

12. Rasenzerstörungsausrüstung nach irgendeinem der vorangegangenen Ansprüche, **dadurch gekennzeichnet, dass** der genannte Rotor (10) geeignet ist, von den genannten Bewegungselementen (12) in eine Drehung mit einer Geschwindigkeit zwischen 300 und 1000 Umdrehungen pro Minute versetzt zu werden, um die Wirkung der Strahlen auf dem Boden während der Fahrt der Zugmaschine gleichmäßig zu verteilen.

13. Rasenzerstörungsausrüstung nach irgendeinem der vorangegangenen Ansprüche, **dadurch gekennzeichnet, dass** die genannten Düsen (11) auf einer um einen Winkel von weniger als 8 Grad nach vorn geneigten Ebene liegen, um während des Vorschubs einen Teil des behandelten Bodens nach hinten zu verschieben.

14. Rasenzerstörungsausrüstung nach irgendeinem der vorangegangenen Ansprüche, **dadurch gekennzeichnet, dass** die genannten Düsen (11) auf einer seitlich im Verhältnis zur Vorschubrichtung des Rotors (10) geneigten Ebene parallel zu der der genannten Zugmaschine (2) liegen, die im Wesentlichen bündig dem Damm der Baumzuchtreihe (C) gegenüberliegt.

## Revendications

1. Équipement pour détruire le gazon, en particulier dans des rangées de cultures arborescentes, comprenant :
- un châssis de support (3) susceptible d'être porté ou traîné moyennant un tracteur (2) dans une direction d'avancement (Y) parallèle aux rangées (F) desdites cultures (C) ou à la direction d'une route ;
- une pompe à haute pression (4) montée sur ledit châssis (3) et apte à être actionnée par des moyens de motorisation (5) associés audit tracteur (2) ;
- un réservoir de liquide (6) susceptible d'être porté ou trainé par ledit tracteur (2), lequel alimente ladite pompe à haute pression (4) ;
- au moins un rotor (10) monté de manière rotative sur ledit châssis (3) en position vis à vis par rapport au sol (T), actionné pour tourner autour d'un axe de rotation (Z) essentiellement vertical par des moyens de mise en mouvement (12) ;
- au moins deux buses (11) montées sur ledit rotor (10) et alimentées par ladite pompe (4) ;
lesdites buses éjectant des jets rotatifs (13) inclinés de fluide sous haute pression incident sur le sol (T) selon des bandes côte à côte, et susceptibles de pénétrer pour au moins un centimètre sous la surface du sol (T) en émiettant l'appareil radical dudit gazon ;
ledit équipement étant **caractérisé en ce que** lesdites buses (11) sont alimentées par ladite pompe (4) avec un flux de fluide sous pression compris entre 500 et 1 500 bar,
lesdites buses (11) étant montées sur ledit rotor (10) à une distance radiale différente dudit axe de rotation (Z) ;
lesdites buses (11) étant inclinées selon une direction d'incidence (X) sur le sol avec angle d'incidence (a) compris entre 120 - 170 degrés, évalué par rapport à l'axe orthogonal au plan du sol (T) avec sens sortant du sol.

2. Équipement pour détruire le gazon selon la revendication 1, **caractérisé en ce que** ledit angle d'incidence (a) est compris entre 130 - 155 degrés.

3. Équipement pour détruire le gazon selon la revendication 1, **caractérisé en ce que** ledit rotor (10) comprend une plaque de support (15') de forme circulaire de la face inférieure de laquelle (15A) sortent au moins deux buses (11), en particulier alimentées par des tubes disposés en rayons (81).

4. Équipement pour détruire le gazon selon l'une quelconque des revendications précédentes, **caractérisé en ce qu'**il comprend une structure à tablette (100), laquelle soutien ledit rotor (10) et est centrée sur ledit châssis (3) étant susceptible de tourner par rapport à un axe essentiellement vertical (Z') entre une position stable d'interférence (P1) à l'intérieur des rangées ou des obstacles situés sur le bord de la route et une position de non interférence (P2) à l'extérieur des rangées ou des obstacles situés sur le bord de la route, ladite structure à tablette (100) étant en particulier susceptible d'être déplacée de ladite position (P1) à l'intérieur des rangées ou des obstacles situés sur le bord de la route à ladite position (P2) à l'extérieur des rangées ou des obstacles situés sur le bord de la route par l'interaction avec le fût des rangées desdites cultures (C).

5. Équipement pour détruire le gazon selon la revendication 4, **caractérisé en ce qu'**il comprend des moyens de poussée (102) aptes à pousser ladite structure à tablette (100) vers ladite position stable d'interférence (P1) à l'intérieur des rangées ou des obstacles situés sur le bord de la route.

6. Équipement pour détruire le gazon selon la revendication 5, **caractérisé en ce que** lesdits moyens de poussée (102) comprennent au moins des premiers moyens élastiques (104) reliés entre la structure à tablette (100) et le châssis (3) le long d'une direction de liaison (A) ayant un composant dans la direction desdites rangées (F) pour pousser ladite structure à tablette (100) de ladite position (P2) à l'extérieur des rangées ou des obstacles situés sur le bord de la route à ladite position (P1) à l'intérieur des rangées ou des obstacles situés sur le bord de la route.

7. Équipement pour détruire le gazon selon la revendication 4, **caractérisé en ce qu'**il comprend un châssis d'appui (105) placé autour dudit rotor (10) et destiné à aller en butée contre le fût des plantes ou contre des obstacles situés sur le bord de la route pendant l'avancement dudit équipement pour déplacer ladite structure à tablette (100) de manière rotative autour de son axe de rotation essentiellement vertical (Z') de ladite position (P1) à l'intérieur des rangées ou des obstacles situés sur le bord de la route à ladite position (P2) à l'extérieur des rangées ou des obstacles situés sur le bord de la route.

8. Équipement pour détruire le gazon selon la revendication 4, **caractérisé en ce que** ladite structure à tablette (100) comprend une plaque de support (106) au-dessous de laquelle est monté le rotor (10) moyennant un joint hydraulique rotatif (80), de laquelle se développe un bras (107) centré sur l'extrémité dudit châssis (3) moyennant une douille (108) avec profil incliné de coulissement (108') sur le châssis (3) pour être forcée par le poids vers ladite position (P1) à l'intérieur des rangées ou des obstacles situés sur le bord de la route.

9. Équipement pour détruire le gazon selon la revendication 4, **caractérisé en ce qu'**il comprend des moyens de suspension (103), en particulier obtenus par au moins un ressort, avantageusement montés entre ledit châssis (3) et ladite structure à tablette (100).

10. Équipement pour détruire le gazon selon la revendication 1, **caractérisé en ce que** ledit rotor (10) comprend une cloche rotative (16), laquelle est munie d'une cavité (17) tournée vers le sol et loge à son intérieur lesdites buses (11) pour les protéger contre les obstacles pendant l'avancement du rotor à l'abri du sol.

11. Équipement pour détruire le gazon selon l'une quelconque des revendications précédentes, **caractérisé en ce que** lesdites buses (11) présentent la bouche d'éjection (11') placée à une distance du sol comprise entre 1-8 cm.

12. Équipement pour détruire le gazon selon l'une quelconque des revendications précédentes, **caractérisé en ce que** ledit rotor (10) est susceptible d'être actionné par lesdits moyens de mise en mouvement (12) pour tourner à une vitesse comprise entre 300 et 1 000 tours à la minute pour distribuer uniformément l'action des jets sur le sol à la suite de l'avancement du tracteur.

13. Équipement pour détruire le gazon selon l'une quelconque des revendications précédentes, **caractérisé en ce que** lesdites buses (11) reposent sur un plan incliné en avant d'un angle inférieur à 8 degrés pour déplacer vers la partie arrière pendant l'avancement une partie du sol traité.

14. Équipement pour détruire le gazon selon l'une quelconque des revendications précédentes, **caractérisé en ce que** lesdites buses (11) reposent sur un plan incliné latéralement par rapport à la direction d'avancement du rotor (10) parallèle à celle dudit tracteur (2) étant essentiellement de façon coplanaire placé en vis-à-vis du buttage de la rangée de culture arborescente (C).
